# FASCICULE DE BREVET EUROPEEN

(11) **EP 4 076 990 B1**
(45) Date de publication et mention de la délivrance du brevet: **14.08.2024**
(21) Numéro de dépôt: 20845580.8
(22) Date de dépôt: 14.12.2020
(51) Int. Cl.: B60C 9/00, B60C 9/04

(54) **NAPPE RENFORCÉE CONFORMABLE**
FORMBARE VERSTÄRKTE SCHICHT
SHAPABLE REINFORCED LAYER

(30) Priorité: 20.12.2019 FR 1915063
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: GUILLAUMAIN, Jérémy, 63040 CLERMONT-FERRAND Cedex 9 (FR); LIMOZIN, Bastien, 63040 CLERMONT-FERRAND Cedex 9 (FR); RIGO, Sébastien, 63040 CLERMONT-FERRAND Cedex 9 (FR)
(74) Mandataire: M.F.P. Michelin
(86) Numéro de dépôt international: PCT/FR2020/052425
(87) Numéro de publication internationale: WO 2021/123588

(56) Documents cités:
- EP-A2- 0 288 987
- FR-A1- 3 014 363
- US-A- 4 343 343

## Description

### Domaine technique de l'invention

La présente invention est relative au domaine des nappes renforcées, en particulier des nappes renforcées destinées à un pneumatique pour véhicule, ainsi qu'au domaine des pneumatiques pour véhicules comprenant de telles nappes.

### Art antérieur

Les nappes renforcées sont généralement constituées d'une pluralité d'éléments de renforts noyés dans une matrice, par exemple élastomérique, ces éléments de renfort pouvant être un tissu, un assemblage de fibres non tissé (tissu « intissé »), ou une pluralité de fils ou câbles, textiles ou métalliques, agencés côte à côte parallèlement les uns aux autres.

Les nappes de renfort doivent présenter des caractéristiques de résistance suffisantes pour assurer leur rôle de renforcement lorsqu'elles sont incorporées dans un objet, par exemple un bandage pneumatique, tout en offrant le moins de résistance possible lors de la fabrication dudit objet, par exemple lors de la conformation d'un bandage pneumatique, afin d'en faciliter la confection. Ces exigences contradictoires peuvent conduire à des dimensionnement complexes des nappes de renfort.

Poursuivant ses recherches, la demanderesse a découvert une nappe renforcée qui présente à la fois une capacité importante à se conformer sous très faible effort, tout en apportant le renforcement nécessaire une fois conformée. Cette nappe est particulièrement adaptée, sans que cela soit limitatif, pour être utilisée comme nappe carcasse dans un bandage pneumatique. Elle permet notamment de simplifier grandement les procédés de fabrication des bandages pneumatiques comprenant des structures de rigidification dans la cavité torique intérieure tels que décrits, par exemple, dans le document WO 2019/115917.

### Description détaillée de l'invention

L'invention concerne une nappe renforcée selon la revendication 1, un article de caoutchouc selon la revendication 13, un bandage pneumatique ou non pneumatique selon la revendication 14 ainsi qu'un procédé de fabrication d'un bandage pneumatique selon la revendication 15.

Les revendications dépendantes décrivent des modes de réalisation préférentiels de l'invention.

### Définitions

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Par « direction générale » d'un objet, on entend la direction générale selon laquelle s'étend l'objet selon sa plus grande longueur. Pour un tissu, la direction générale du tissu est parallèle aux bords longitudinaux du tissu. Ainsi, par exemple, un tissu enroulé sur une bobine de révolution autour d'un axe présente une direction générale sensiblement parallèle à la direction de déroulage du tissu (c'est à dire la direction circonférentielle) qui est perpendiculaire aux directions axiale et radiale de la bobine.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par l'expression "élément à base de", il faut entendre un élément comprenant le mélange et/ou le produit de réaction in situ des différents constituants ou matériaux utilisés, certains de ces constituants ou matériaux pouvant réagir et/ou étant destinés à réagir entre eux, au moins partiellement, lors des différentes phases de fabrication de l'élément.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Nappe renforcée

La nappe renforcée selon l'invention comprend une pluralité d'éléments de renfort agencés côte à côte parallèlement les uns aux autres selon une direction principale (A) et noyés dans une composition polymérique, chaque élément de renfort comprend des premier et deuxième organes filaires, le premier organe filaire présentant au repos une surlongueur de A1 % par rapport à la longueur au repos du deuxième organe filaire, avec 0 % < A1 < AR, AR représentant en pourcentage l'allongement à rupture du deuxième organe filaire, pour tout allongement de la nappe selon la direction principale (A) inférieur ou égal à A1 %, le deuxième organe filaire se déforme plastiquement, pour chaque élément de renfort M1/M2<1, M1 étant le module de l'élément de renfort pour tout allongement de la nappe inférieur ou égal à K1×A1 %, M2 étant le module de l'élément de renfort pour tout allongement de la nappe supérieur ou égal à K2×A1 %, avec K1 allant de 0,8 à 0,95, et K2 allant de 1,05 à 1,2, les modules M1, M2 et l'allongement à rupture AR étant mesurés selon la norme ASTM D885-03.

La nappe renforcée selon l'invention présente ainsi une résistance à l'allongement modérée pour tout allongement de la nappe selon la direction principale (A) inférieur à A1 %, au cours duquel les éléments de renfort présentent un module M1 puis, du fait d'un module M2 supérieur à M1, une résistance plus importante pour tout allongement de la nappe selon la direction principale (A) supérieur à A1 %. Il est ainsi aisé d'ajuster le dimensionnement de la nappe en fonction de la conformation souhaitée lorsque cette nappe est intégrée dans un objet, en alignant la direction principale (A) sensiblement avec la direction de déformation de l'objet intégrant la nappe.

De manière préférée, M1/M2 est inférieur ou égal à 0,5, préférentiellement inférieur ou égal à 0,1, et de manière très préférée inférieur ou égal à 0,05. Ce ratio traduit la différence de comportement de la nappe en terme de résistance à l'allongement selon la direction principale (A). Plus ce ratio est faible, et plus la résistance à l'allongement pour un allongement supérieur à A1% sera élevée relativement à la résistance à l'allongement pour un allongement inférieur à A1%.

Les valeurs de modules M1 et M2, le nombre de renforts et leur densité de pose, exprimée en nombre de fils par dm mesuré dans le plan de la nappe selon une direction perpendiculaire à la direction principale (A) sont ajustés par l'Homme du métier en fonction des spécificités requises pour la nappe, notamment par un choix approprié des matériaux constitutifs des éléments de renfort.

De manière préférée, pour tout allongement de la nappe selon la direction principale (A) inférieur à K1×A1%, chaque élément de renfort présente un module inférieur ou égal à 10/A1 N, de préférence inférieur ou égal à 8/A1 N, de manière préférée inférieur ou égal à 7/A1 N. Par exemple, et uniquement à titre d'illustration du calcul en prenant arbitrairement A1=20, pour tout allongement de la nappe selon la direction principale (A) inférieur à K1×20%, chaque élément de renfort présente un module inférieur ou égal à 10/20 N, de préférence inférieur ou égal à 8/20 N, de manière préférée inférieur ou égal à 7/20 N. Ainsi, une force relativement faible est nécessaire pour allonger la nappe selon la direction principale (A) jusqu'à un allongement de K1×A1%.

De manière préférée, pour tout allongement de la nappe selon la direction principale (A) supérieur à K2×A1%, chaque élément de renfort présente un module supérieur ou égal à 10 N, de préférence supérieur ou égal à 15 N. Ainsi, la nappe présente une bien plus forte résistance à l'allongement pour tout allongement supérieur à K2×A1%. De manière très préférée, chaque élément de renfort présente un module inférieur ou égal à 25 N, de préférence inférieur ou égal à 20 N.

Les facteurs K1 et K2 représentent une zone de transition pendant laquelle le module de l'élément de renfort est compris entre M1 et M2. De manière préférée, K2 va de 1,1 à 1,2, préférentiellement de 1,15 à 1,2 et de manière préférée K2=1,2. De manière préférée, K1 va de 0,85 à 0,95, préférentiellement de 0,9 à 0,95 et de manière préférée K1=0,95.

### - Premier organe filaire

Chaque élément de renfort de la nappe renforcée selon l'invention comprend des premier et deuxième organes filaires, le premier organe filaire présentant au repos une surlongueur de A1% par rapport à la longueur au repos du deuxième organe filaire, avec 0 % < A1 < AR, AR représentant en pourcentage l'allongement à rupture du deuxième organe filaire, AR étant mesuré selon la norme ASTM D885-03. Par surlongueur de A1%, on entend que le premier organe filaire présente au repos une longueur égale à (100+A1)% de la longueur au repos du deuxième organe filaire.

De manière préférée, le premier organe filaire comprend au moins un brin multifilamentaire comprenant plusieurs monofilaments chacun constitué d'un matériau choisi parmi un polyester, un polyamide, une polycétone, un polyuréthane, une fibre naturelle et un assemblage de ces matériaux, de préférence choisi parmi un polyester, un polyamide, une polycétone, un polyuréthane et un assemblage de ces matériaux, plus préférentiellement choisi parmi les polyesters et les assemblages de polyesters. Les polyesters sont avantageux en raison de leur ténacité élevée, leur coût faible, leur tenue thermique compatible en particulier avec une utilisation dans les bandages pneumatique et une contraction thermique standard pouvant être choisie.

Le premier organe filaire présente au repos une surlongueur de A1% par rapport à la longueur au repos du deuxième organe filaire. De manière préférée, A1 est compris dans l'intervalle allant de 15 à 50 %, de préférence de 15 à 45%, de manière très préférée de 15 à 25 %. Ainsi, lorsque la nappe est allongée selon la direction principale (A), le deuxième organe filaire se déforme plastiquement pendant que le premier organe filaire se déploie, du fait de sa surlongueur. Lorsque la nappe atteint un allongement de A1%, le premier organe filaire est totalement déployé, contribuant plus pleinement à la résistance à l'allongement de la nappe selon la direction principale (A).

La longueur au repos du premier organe filaire est mesurée selon la direction principale du premier organe filaire. Cette longueur correspond à la longueur totale du premier organe filaire quand il n'est pas incorporé dans un élément de renfort, et lorsqu'il est au repos, c'est-à-dire qu'il n'est ni en extension, ni en compression selon la direction générale du premier organe filaire, et présente donc un allongement nul.

La ténacité du premier organe filaire est préférentiellement supérieure ou égale à 30 cN/tex, de préférence inférieure à 40 cN/tex, de manière préférée inférieure à 60 cN/tex. La ténacité du premier organe filaire est déterminée selon la norme ASTM D885-03.

### - Deuxième organe filaire

Le deuxième organe filaire de chaque élément de renfort de la nappe renforcée selon l'invention est tel que pour tout allongement de la nappe selon la direction principale (A) inférieur ou égal à A1%, le deuxième organe filaire se déforme plastiquement.

De manière préférée, pour tout allongement de la nappe selon la direction principale (A) inférieure ou égal à A1%, chaque premier et deuxième organe filaire est non rompu.

Afin de préserver l'intégrité de la nappe renforcée lors de son allongement, il est préférable que l'allongement à rupture du deuxième organe filaire soit suffisant. De préférence, pour chaque élément de renfort, le deuxième organe filaire présente un allongement avant rupture AR supérieur ou égal à 30%, préférentiellement supérieur ou égal à 50 %, de préférence supérieur ou égal à 60%, de manière préférée supérieur ou égal à 80% et de manière très préférée supérieur ou égal à 100%, supérieur ou égal à 150%, très préférentiellement supérieur ou égal à 200%.

L'allongement à rupture des deuxièmes organes filaires est mesuré au sein de l'élément de renfort (c'est-à-dire en assemblage dans un élément de renfort) selon la norme ASTM D885-03.

La ténacité du deuxième organe filaire est préférentiellement inférieure ou égale à 20 cN/tex, de préférence inférieure ou égale à 15 cN/tex, de manière préférée inférieure ou égale à 10 cN/tex. La ténacité du deuxième organe filaire est déterminée selon la norme ASTM D885-03. Cette faible ténacité, associée au caractère plastique du deuxième organe filaire, permet à celui-ci de se déformer plastiquement très facilement sans rompre, sous faible contrainte, et confère par conséquent à la nappe renforcée selon l'invention une capacité à s'allonger selon la direction générale (A) de manière uniforme, homogène et sans à-coup au cours de l'étape de conformation imposée lors de la fabrication d'un objet incorporant cette nappe, par exemple un bandage pneumatique, sans retour élastique, ce qui réduit considérablement le risque d'obtenir un objet irrégulier avant cuisson.

De manière préférée, le deuxième organe filaire est constitué d'un matériau choisi parmi un polyester, un polyamide, une polycétone et un assemblage de ces matériaux, de préférence choisi parmi un polyester, un polyamide, une polycétone et un assemblage de ces matériaux, plus préférentiellement en polyamide et très préférentiellement choisi parmi les polyamides aliphatiques tels que les nylons, en particulier les nylons PA4.6, PA6, PA6.6 ou encore PA6.10. Les organes filaires en nylon présentent avantageusement des allongements à rupture relativement élevés et des ténacités inférieures à des matériaux couramment utilisés tels que, par exemple, la rayonne.

De manière préférée, dans chaque élément de renfort, le deuxième organe filaire est sensiblement rectiligne et le premier organe filaire est enroulé sensiblement en hélice autour du deuxième organe filaire. Ainsi, lorsque l'élément de renfort est déformé selon sa direction principale (A), le deuxième organe filaire s'allonge en se déformant plastiquement tandis que le premier organe filaire se déploie. Dans un arrangement, l'élément de renfort est ainsi de type guipé.

Un deuxième organe filaire particulièrement adapté aux besoins de l'invention est par exemple un fil nylon de titre compris entre 20 et 30 tex et présentant une force à rupture comprise entre 200 et 250 cN tels que par exemple les fils « Webflex HEN » de la société Coats.

De manière préférée, le deuxième organe filaire étant sensiblement rectiligne, le premier organe filaire est enroulé en hélice autour du deuxième organe filaire et forme sensiblement périodiquement des boucles. Dans un arrangement préféré, l'élément de renfort est de type bouclé.

Les éléments de renfort de type bouclé (« loop yarn » ou « boucle yarn ») sont bien connus de l'Homme du métier. Ils diffèrent des éléments de type guipé (ou « gimp yarn ») en ce que le premier organe filaire, couramment appelé « fil de couverture » ou « fil d'effet », est surralimenté lors de la fabrication de l'élément. Les éléments de renfort de type bouclé peuvent être produits par les procédés classiques tels que des métiers à anneaux, qui permettent de mettre en oeuvre des deuxièmes organes filaires de plus faibles ténacité qu'avec les procédés de type machine à âme cassante avec lesquels sont produits les éléments de type guipé.

Ainsi, en utilisant des éléments de renfort de type bouclé, on peut mettre en oeuvre dans la nappe selon l'invention des deuxièmes organes filaires se déformant plastiquement sous faible contrainte, ce qui permet une déformation plus facile, uniforme et homogène de la nappe selon l'invention lors de l'opération de conformation.

Dans un arrangement préféré le deuxième organe filaire comprend au moins un monofilament, préférentiellement deux monofilaments. Dans un autre arrangement préféré, le deuxième organe filaire comprend au moins un brin multifilamentaire comprenant plusieurs monofilaments.

L'élément de renfort peut en outre comprendre, de manière préférée, un moyen de solidarisation du premier et du deuxième organe filaire, ce moyen de solidarisation étant par exemple un fil de lien, enroulé sensiblement en hélice autour du premier et du deuxième organe filaire, solidarisant le premier et le deuxième organe filaire. Ce moyen de solidarisation, par exemple ce fil de lien, est préférentiellement constitué d'un matériau choisi parmi un polyester, un polyamide, une polycétone et un assemblage de ces matériaux, de préférence choisi parmi un polyester, un polyamide, une polycétone et un assemblage de ces matériaux, plus préférentiellement en polyamide et très préférentiellement choisi parmi les polyamides aliphatiques tels que les nylons, en particulier les nylons PA4.6, PA6, PA6.6 ou encore PA6.10.

### - Composition polymérique

La nappe renforcée selon l'invention comprend une pluralité d'éléments de renforts noyés dans une composition polymérique.

Par « noyé », on entend que chaque élément de renfort est entouré de la composition polymérique.

Dans un mode de réalisation, la composition polymérique comprend au moins un élastomère choisi parmi les élastomères diéniques, oléfiniques, thermoplastiques et leurs mélanges. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, de la silice, ou leur mélange, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

La nappe renforcée selon l'invention est particulièrement adaptée pour être utilisée dans un bandage pneumatique ou non pneumatique. De manière préférée, et eu égard aux contraintes spécifiques des bandages destinés à supporter un véhicule, une nappe renforcée destinée à un pneumatique pour véhicule, c'est-à-dire apte à être utilisée dans un pneumatique pour véhicule, présente un pas de pose p des éléments de renfort selon la direction (X), perpendiculaire à la direction (A), qui va de 0,5 à 1,5 mm, de préférence de 0,7 à 1,5 mm, la direction (A) étant sensiblement parallèle à la direction axiale (YY') du bandage pneumatique. Ce pas de pose permet un renforcement suffisant pour résister aux contraintes subies par le bandage pneumatique.

De manière préférée, dans une nappe renforcée adaptée pour être utilisée dans un bandage pneumatique, le ratio D/(p-D) va de 0,6 à 4,5, de préférence de 0,8 à 4,2, avec D représentant le diamètre de l'élément de renfort. Lorsque ce ratio est respecté, la taille des ponts de gomme, c'est-à-dire la gomme disposée entre deux éléments de renfort consécutifs, est particulièrement bien adaptée pour un usage en bandage pneumatique.

De manière préférée, une nappe renforcée adaptée pour être utilisée dans un bandage pneumatique présente une épaisseur moyenne inférieure ou égale à 3 mm, de préférence inférieure ou égale à 2 mm, préférentiellement inférieure ou égale à 1,5 mm afin de limiter l'épaisseur globale du bandage et ainsi limiter, entre autre, la résistance au roulement du bandage pneumatique.

### Article fini ou semi-fini et pneumatique

L'invention a également pour objet un article de caoutchouc fini ou semi-fini comprenant une nappe renforcée selon l'invention. L'article fini ou semi-fini peut être tout article comprenant une nappe renforcée. On peut citer par exemple et de manière non limitative les bandes transporteuses, bandages pneumatiques ou non pneumatiques.

Un bandage pneumatique pour véhicule, destiné à être monté sur une jante, présente une largeur axiale S et une hauteur radiale H à l'état monté gonflé et comprend un sommet ayant une surface de roulement radialement extérieure, destinée à entrer en contact avec un sol, et deux extrémités axiales, prolongées chacune radialement vers l'intérieur, par un flanc puis par un bourrelet destiné à entrer en contact avec la jante. Le sommet, les flancs et les bourrelets délimitent une cavité torique intérieure. Le bandage pneumatique comprend au moins une armature de carcasse s'étendant depuis les bourrelets à travers les flancs jusqu'au sommet, ladite armature étant ancrée dans les deux bourrelets. Le bandage pneumatique selon l'invention est caractérisé en ce que l'armature de carcasse est une nappe selon l'invention.

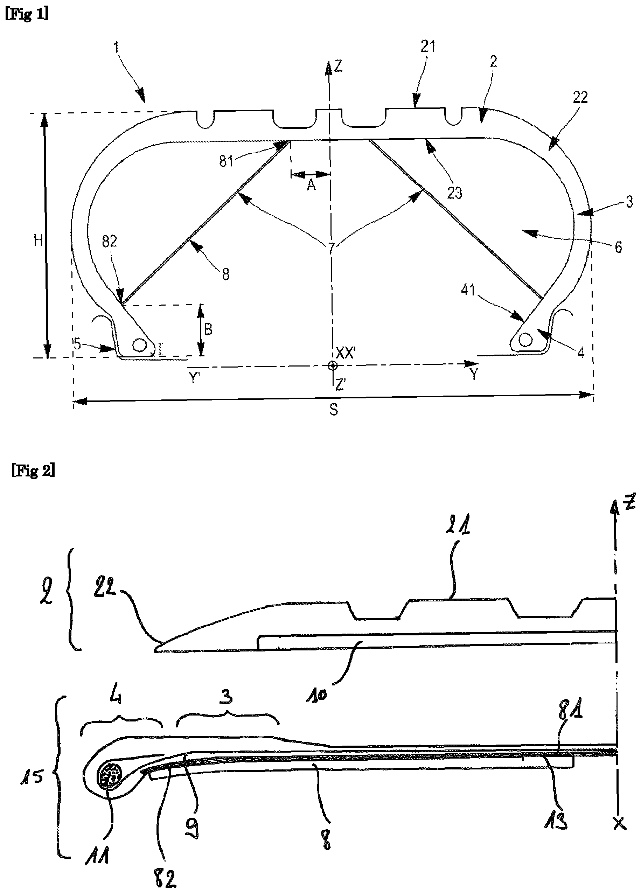

De manière préférée, et en référence à la figure 1 utilisée à titre d'illustration non limitative, un bandage pneumatique (1) selon l'invention destiné à être monté sur une jante (5) comprend un sommet (2) ayant une surface de roulement (21) radialement extérieure, destinée à entrer en contact avec un sol, et deux extrémités axiales (22) prolongées chacune radialement vers l'intérieur, par un flanc (3) puis par un bourrelet (4) destiné à entrer en contact avec la jante (5). Le sommet, les flancs et les bourrelets délimitent une cavité torique intérieure (6). Le bandage pneumatique (1) comprend au moins une nappe carcasse constituée d'une nappe renforcée selon l'invention et comprend une structure de rigidification (7) comprenant deux éléments de rigidification (8), chacun s'étendant continûment dans la cavité torique intérieure (6), à partir d'une interface de sommet (81), reliée à une face radialement intérieure du sommet (23), jusqu'à une interface de bourrelet (82), reliée à une face axialement intérieure de bourrelet (41), la structure de rigidification (7) étant répartie circonférentiellement sur toute la circonférence du pneumatique, l'interface de sommet (81) étant positionnée, par rapport au plan équatorial (XZ) passant par le milieu de sa surface de roulement (21) et perpendiculaire à un axe de rotation (YY'), à une distance axiale A au plus égale à 0.45 fois la largeur axiale S, l'interface de bourrelet (82) étant positionnée, par rapport à un point (I) le plus radialement intérieur de la face axialement intérieure de bourrelet (41), à une distance radiale B au moins égale à 0.10 fois la hauteur radiale H et au plus égale à 0.5 fois la hauteur radiale H.

Le principe du bandage pneumatique selon cette variante de l'invention est d'implanter, dans un pneumatique classique, une structure de rigidification destinée à augmenter la rigidité globale du pneumatique, celle-ci ayant une composante structurelle, appelée rigidité structurelle et apportée par la structure de renforcement du pneumatique, et une composante pneumatique, appelée rigidité pneumatique et apportée par la pression du gaz de gonflage. La structure de rigidification apporte une contribution à la rigidité pneumatique.

### Procédé de fabrication d'un pneumatique selon l'invention

Les bandages pneumatiques crus, appelés de manière commune « ébauche », sont généralement fabriqués à partir de tambours en suivant des étapes connues de confection à plat sur un premier tambour, de conformation sur un deuxième tambour puis de finition. Une étape finale de cuisson permet à la matière crue plastique de devenir élastique notamment par vulcanisation. Lors de l'étape de conformation, l'espace annulaire intérieur du bandage pneumatique est en général formé en gonflant l'ébauche du bandage pneumatique assemblée sur le tambour, ou en déformant cette ébauche à l'aide d'une membrane ou d'une paroi déformable.

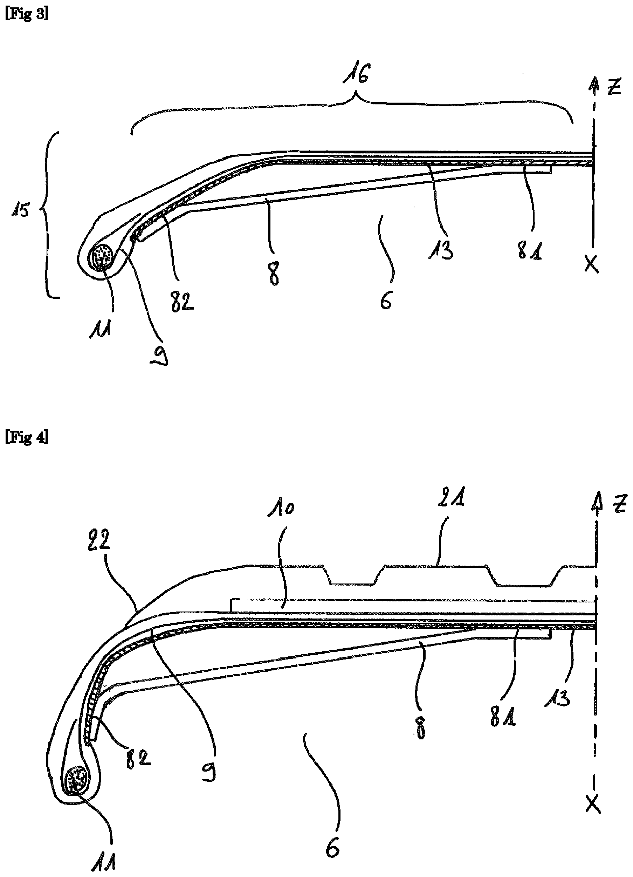

On se réfère dans ce qui suit pour illustration et de manière non limitative aux figures 1 à 4 dans lesquelles les éléments identiques sont numérotés de même manière.

L'invention a également pour objet un procédé de fabrication d'un bandage pneumatique selon l'invention dans lequel :
- on confectionne autour d'un cylindre de confection sensiblement de révolution autour d'un axe de révolution, par mise en place successive des différents éléments la composant, un manchon (15) comprenant au moins :
   - deux bourrelets (4) destinés à entrer en contact avec une jante situés axialement sensiblement à équidistance d'un plan équatorial (XZ) de l'ébauche et deux flancs (3), chaque flanc (3) s'étendant depuis un bourrelet (4) axialement vers l'intérieur,
   - située radialement intérieurement une armature de carcasse (9), reliant les deux flancs (3) entre eux, ancrée dans chaque bourrelet (4) à un élément de renforcement circonférentiel (11), ladite armature de carcasse (9) étant constituée d'une nappe renforcée selon l'invention,
   - éventuellement située radialement intérieurement à l'armature de carcasse une couche de gomme (13) étanche aux gaz de gonflage (« inner liner » en anglais),
- on déploie un espace annulaire intérieur (6) en écartant radialement vers l'extérieur au moins la portion (16) du manchon située entre les flancs destinée à former la partie sommet de l'ébauche,
- on met en place radialement à l'extérieur de l'ébauche un sommet (2) comprenant une surface de roulement (21) radialement extérieure, destinée à entrer en contact avec un sol, une armature de sommet (10) destinée à assurer le renforcement du sommet du bandage pneumatique, le sommet comprenant deux extrémités axiales (22) telles que, après mise en place du sommet (2) sur le manchon (15), chaque flanc (3) prolonge une extrémité axiale (22) vers un bourrelet (4).

Le plan équatorial (XZ) est le plan perpendiculaire à un axe de rotation du bandage ou de l'ébauche et passant par le milieu de sa surface de roulement. Par ébauche, on entend un bandage pneumatique à l'état cru, c'est-à-dire avant réticulation des compositions qui le constituent.

De préférence, on déploie l'espace annulaire intérieur (6) par pressurisation par un gaz de gonflage de l'espace annulaire intérieur.

De préférence, l'ébauche comprend une structure de rigidification (7) comprenant deux éléments de rigidification (8), reliée d'une part par une interface de sommet (81) à une face radialement intérieure du sommet, et d'autre part reliée par une interface de bourrelet (82) axialement intérieure au bourrelet, la structure de rigidification étant répartie circonférentiellement sur toute la circonférence du bandage pneumatique (1).

Ainsi, une fois l'espace annulaire intérieur (6) déployé, chacun des deux éléments (8) de la structure de rigidification (7) s'étendent continûment dans la cavité torique intérieure, à partir d'une interface de sommet jusqu'à une interface de bourrelet.

La nappe renforcée selon l'invention est particulièrement adaptée à la confection de bandages pneumatiques comprenant une structure dans l'espace torique intérieur. En effet, la longueur L1 de cette structure entre ses points d'attache sur la surface intérieure du bandage étant inférieure à la longueur L2 entre les points d'attaches mesurée en suivant ladite surface intérieure, il serait impossible de confectionner un tel bandage en mettant en oeuvre une confection à plat telle qu'usuellement pratiquée. Du fait de l'extensibilité de la nappe renforcée selon l'invention utilisée comme nappe de carcasse, les différents éléments de l'ébauche peuvent être posés à plat, la nappe renforcée étant dimensionnée de façon à ce que A1 soit substantiellement égal à (L2/L1-1)x100.

### Description des figures

[Fig 1] La figure 1 montre un bandage pneumatique selon l'invention.
[Fig 2] La figure 2 est une illustration schématique d'un manchon en cours de confection et d'un sommet.
[Fig 3] La figure 3 illustre schématiquement le déploiement de l'espace torique intérieur (6) par conformation du manchon.
[Fig 4] La figure 4 illustre schématiquement un bandage pneumatique fabriqué selon le procédé de l'invention, les figures 2 à 4 illustrant séquentiellement l'exécution générale dudit procédé.

### Méthodes de mesures

Les valeurs de module et d'allongement à rupture des éléments de renfort sont mesurées selon la norme ASTM D885-03.

## Revendications

1. Nappe renforcée comprenant une pluralité d'éléments de renfort agencés côte à côte parallèlement les uns aux autres selon une direction principale (A) et noyés dans une composition polymérique, chaque élément de renfort comprenant des premier et deuxième organes filaires, le premier organe filaire présentant au repos une surlongueur de A1 % par rapport à la longueur au repos du deuxième organe filaire, avec 0 % < A1 < AR, AR représentant en pourcentage l'allongement à rupture du deuxième organe filaire, pour chaque élément de renfort M1/M2<1, M1 étant le module de l'élément de renfort pour tout allongement de la nappe inférieur ou égal à K1×A1%, M2 étant le module de l'élément de renfort pour tout allongement de la nappe supérieur ou égal à K2×A1%, avec K1 allant de 0,8 à 0,95, et K2 allant de 1,05 à 1,2, les modules M1, M2 et l'allongement à rupture AR étant mesurés selon la norme ASTM D88503,
la nappe renforcée étant **caractérisée en ce que** pour tout allongement de la nappe selon la direction principale (A) inférieur ou égal à A1%, le deuxième organe filaire se déforme plastiquement.

2. Nappe renforcée selon la revendication précédente dans laquelle, pour chaque
élément de renfort, M1/M2 est inférieur ou égal à 0,5, préférentiellement inférieur ou égal à 0,1 et de manière préférée inférieur ou égal à 0,05.

3. Nappe renforcée selon l'une quelconque des revendications précédentes dans
laquelle, pour tout allongement de la nappe selon la direction principale (A) inférieur à K1×A1 %, chaque élément de renfort présente un module inférieur ou égal à 10/A1 N, de préférence inférieur ou égal à 8/A1 N, de manière préférée inférieur ou égal à 7/A1 N.

4. Nappe renforcée selon l'une quelconque des revendications précédentes dans
laquelle, pour tout allongement de la nappe selon la direction principale (A) supérieur à K2×A1 %, chaque élément de renfort présente un module supérieur ou égal à 10 N, de préférence supérieur ou égal à 15 N.

5. Nappe renforcée selon l'une quelconque des revendications précédentes dans
laquelle A1 est compris dans l'intervalle allant de 15 à 50 %, de préférence de 15 à 45%, de manière très préférée de 15 à 25 %.

6. Nappe renforcée selon l'une quelconque des revendications précédentes dans
laquelle, pour chaque élément de renfort, le deuxième organe filaire présente un allongement avant rupture AR mesuré selon la norme ASTM D885-03 supérieur ou égal à 30%, préférentiellement supérieur ou égal à 50 %, de préférence supérieur ou égal à 60%, de manière préférée supérieur ou égal à 80% et de manière très préférée supérieur ou égal à 100%.

7. Nappe renforcée selon l'une quelconque des revendications précédentes dans
laquelle la ténacité du deuxième organe filaire est inférieure ou égale à 20 cN/tex, de préférence inférieure ou égale à 15 cN/tex, de manière préférée inférieure ou égale à 10 cN/tex.

8. Nappe renforcée selon l'une quelconque des revendications précédentes dans
laquelle la ténacité du premier organe filaire est supérieure ou égale à 30 cN/tex, de préférence supérieure ou égale à 40 cN/tex et de manière préférée supérieure ou égale à 60 cN/tex.

9. Nappe renforcée selon l'une quelconque des revendications précédentes dans
laquelle l'élément de renfort comprend en outre un moyen de solidarisation du premier et du deuxième organe filaire.

10. Nappe renforcée selon l'une quelconque des revendications précédentes dans
laquelle la composition polymérique comprend au moins un élastomère choisi parmi les élastomères diéniques, oléfiniques, thermoplastiques et leurs mélanges.

11. Nappe renforcée selon l'une quelconque des revendications précédentes dans
laquelle la composition polymérique comprend une charge renforçante choisie parmi le noir de carbone, la silice et leur mélange.

12. Nappe renforcée selon l'une quelconque des revendications précédentes selon nappe étant destinée à un bandage pneumatique pour véhicule, dans laquelle le pas de
pose p des éléments de renfort selon la direction (X), perpendiculaire à la direction (A), va de 0,5 à 1,5 mm, de préférence de 0,7 à 1,5 mm, la direction (A) étant sensiblement parallèle à la direction axiale (YY') du bandage pneumatique.

13. Article de caoutchouc comprenant une nappe renforcée selon l'une quelconque des
revendications 1 à 12.

14. Bandage pneumatique ou non pneumatique pour véhicule comprenant une nappe renforcée selon l'une quelconque des revendications 1 à 12.

15. Procédé de fabrication d'un bandage pneumatique (1) selon la revendication
précédente dans lequel :
• on confectionne autour d'un cylindre de confection sensiblement de révolution autour d'un axe de révolution, par mise en place successive des différents éléments la composant, un manchon (15) comprenant au
moins:
i. deux bourrelets (4) destinés à entrer en contact avec une jante (5) situés axialement sensiblement à équidistance d'un plan équatorial (XZ) de l'ébauche et deux flancs, chaque flanc (3) s'étendant depuis un bourrelet axialement vers l'intérieur,
ii. située radialement intérieurement une armature de carcasse (9) reliant les deux flancs entre eux, ancrée dans chaque bourrelet à un élément de renforcement circonférentiel (11), ladite armature de carcasse étant constituée d'une nappe renforcée selon l'une des revendications 1 à 12,
• on déploie un espace annulaire intérieur (6) en écartant radialement vers l'extérieur au moins la portion (16) du manchon située entre les flancs destinée à former la partie sommet de l'ébauche,
• on met en place radialement à l'extérieur de l'ébauche un sommet (2) comprenant une surface de roulement (21) radialement extérieure, destinée à entrer en contact avec un sol, une armature de sommet (10) destinée à assurer le renforcement du sommet du bandage pneumatique, le sommet comprenant deux extrémités axiales (22) telles que, après mise en place du sommet sur le manchon, chaque flanc prolonge une extrémité axiale vers un bourrelet, ébauche étant entendu comme un bandage pneumatique à l'état cru, c'est-à-dire avant réticulation des compositions qui le constituent.

## Patentansprüche

1. Verstärkte Schicht, die eine Vielzahl von Verstärkungselementen beinhaltet, die nebeneinander und parallel zueinander gemäß einer Hauptrichtung (A) angeordnet und in einer Polymerzusammensetzung eingebettet sind, wobei jedes Verstärkungselement ein erstes und ein zweites Drahtorgan beinhaltet, wobei das erste Drahtorgan im unbeanspruchten Zustand eine Überlänge von A1 % mit Bezug auf die Länge im unbeanspruchten Zustand des zweiten Drahtorgans aufweist, mit 0 % < A1 < AR, wobei AR die Bruchdehnung des zweiten Drahtorgans in Prozent darstellt, wobei für jedes Verstärkungselement
M1/M2<1, wobei M1 der Modul des Verstärkungselements für jede Dehnung der Schicht kleiner als oder gleich K1×A1 % ist, wobei M2 der Modul des Verstärkungselements für jede Dehnung der Schicht größer als oder gleich K2xA1 % ist, wobei K1 von 0,8 bis 0,95 reicht und K2 von 1,05 bis 1,2 reicht, wobei die Module M1, M2 und die Bruchdehnung AR gemäß der Norm ASTM D885 03 gemessen werden, wobei die verstärkte Schicht **dadurch gekennzeichnet ist, dass** für jede Dehnung der Schicht gemäß der Hauptrichtung (A) kleiner als oder gleich A1 % sich das zweite Drahtorgan plastisch verformt.

2. Verstärkte Schicht nach dem vorhergehenden Anspruch, wobei M1/M2 für jedes Verstärkungselement kleiner als oder gleich 0,5, vorzugsweise kleiner als oder gleich 0,1 und bevorzugt kleiner als oder gleich 0,05 ist.

3. Verstärkte Schicht nach einem beliebigen der vorhergehenden Ansprüche, wobei, für jede Dehnung der Schicht gemäß der Hauptrichtung (A) kleiner als K1×A1 %, jedes Verstärkungselement einen Modul kleiner als oder gleich 10/A1 N, vorzugsweise kleiner als oder gleich 8/A1 N, bevorzugt kleiner als oder gleich 7/A1 N aufweist.

4. Verstärkte Schicht nach einem beliebigen der vorhergehenden Ansprüche, wobei, für jede Dehnung der Schicht gemäß der Hauptrichtung (A) größer als K2xA1 %, jedes Verstärkungselement einen Modul größer als oder gleich 10 N, vorzugsweise größer als oder gleich 15 N aufweist.

5. Verstärkte Schicht nach einem beliebigen der vorhergehenden Ansprüche, wobei A1 in dem Intervall enthalten ist, das von 15 bis 50 %, vorzugsweise von 15 bis 45 %, besonders bevorzugt von 15 bis 25 % reicht.

6. Verstärkte Schicht nach einem beliebigen der vorhergehenden Ansprüche, wobei, für jedes Verstärkungselement, das zweite Drahtorgan eine Dehnung vor dem Bruch AR, die gemäß der Norm ASTM D885-03 gemessen wird, größer als oder gleich 30 %, vorzugsweise größer als oder gleich 50 %, vorzugsweise größer als oder gleich 60 %, bevorzugt größer als oder gleich 80 % und besonders bevorzugt größer als oder gleich 100 % aufweist.

7. Verstärkte Schicht nach einem beliebigen der vorhergehenden Ansprüche, wobei die Festigkeit des zweiten Drahtorgans kleiner als oder gleich 20 cN/tex, vorzugsweise kleiner als oder gleich 15 cN/tex, bevorzugt kleiner als oder gleich 10 cN/tex ist.

8. Verstärkte Schicht nach einem beliebigen der vorhergehenden Ansprüche, wobei die Festigkeit des ersten Drahtorgans größer als oder gleich 30 cN/tex, vorzugsweise größer als oder gleich 40 cN/tex und bevorzugt größer als oder gleich 60 cN/tex ist.

9. Verstärkte Schicht nach einem beliebigen der vorhergehenden Ansprüche, wobei das Verstärkungselement ferner ein Mittel zum Verbinden des ersten und des zweiten Drahtorgans beinhaltet.

10. Verstärkte Schicht nach einem beliebigen der vorhergehenden Ansprüche, wobei die Polymerzusammensetzung mindestens ein Elastomer beinhaltet, das aus Dien-, Olefin-, thermoplastischen Elastomeren und Mischungen davon ausgewählt ist.

11. Verstärkte Schicht nach einem beliebigen der vorhergehenden Ansprüche, wobei die Polymerzusammensetzung einen verstärkenden Füllstoff beinhaltet, der aus Industrieruß, Siliciumdioxid und Mischungen davon ausgewählt ist.

12. Verstärkte Schicht nach einem beliebigen der vorhergehenden Ansprüche, wobei die Schicht für einen Luftreifen für ein Fahrzeug bestimmt ist, wobei der Verlegeabstand p der Verstärkungselemente gemäß der zu der Richtung (A) senkrechten Richtung (X) von 0,5 bis 1,5 mm, vorzugsweise von 0,7 bis 1,5 mm reicht, wobei die Richtung (A) zu der axialen Richtung (YY') des Luftreifens im Wesentlichen parallel ist.

13. Kautschukgegenstand, der eine verstärkte Schicht nach einem beliebigen der Ansprüche 1 bis 12 beinhaltet.

14. Luftreifen oder Vollreifen für ein Fahrzeug, der eine verstärkte Schicht nach einem beliebigen der Ansprüche 1 bis 12 beinhaltet.

15. Verfahren zur Herstellung eines Luftreifens (1) nach dem vorhergehenden Anspruch, bei dem:
• um einen Konfektionszylinder, der um eine Drehachse im Wesentlichen drehsymmetrisch ist, durch sukzessives Aufbringen der unterschiedlichen Bestandselemente eine Hülle (15) konfektioniert wird, die mindestens Folgendes beinhaltet:
i. zwei Wülste (4), die dazu bestimmt sind, mit einer Felge (5) in Kontakt zu kommen, und axial im Wesentlichen äquidistant von einer Äquatorialebene (XZ) des Rohlings entfernt sind, und zwei Flanken, wobei sich jede Flanke (3) von einem Wulst axial nach innen erstreckt,
ii. radial innen liegend eine Karkassenbewehrung (9), die die zwei Flanken miteinander verbindet und in jedem Wulst an einem Umfangsverstärkungselement (11) verankert ist, wobei die Karkassenbewehrung aus einer verstärkten Schicht nach einem der Ansprüche 1 bis 12 besteht,
• ein ringförmiger Innenraum (6) aufgeweitet wird, indem mindestens der Abschnitt (16) der Hülle, der sich zwischen den Flanken befindet und dazu bestimmt ist, den Scheitelteil des Rohlings zu bilden, radial nach außen gedrängt wird,
• zu dem Rohling radial außen liegend ein Scheitel (2) eingerichtet wird, der eine radial außen liegende Laufoberfläche (21), die dazu bestimmt ist, mit einem Boden in Kontakt zu kommen, eine Scheitelbewehrung (10), die dazu bestimmt ist, die Verstärkung des Scheitels des Luftreifens zu gewährleisten, beinhaltet, wobei der Scheitel zwei axiale Enden (22) beinhaltet, derart, dass nach der Einrichtung des Scheitels an der Hülle jede Flanke ein axiales Ende hin zu einem Wulst verlängert, wobei unter einem Rohling ein Luftreifen im Rohzustand, das heißt vor der Vernetzung der Zusammensetzungen, aus denen er besteht, verstanden wird.

## Claims

1. Reinforced ply comprising a plurality of reinforcing elements that are arranged side by side parallel to one another in a main direction (A) and are embedded in a polymer composition, each reinforcing element comprising first and second filamentary members, the first filamentary member having, at rest, an overlength of A1% with respect to the length at rest of the second filamentary member, where 0% < A1 < AR, AR representing the elongation at break, in per cent, of the second filamentary member, for each reinforcing element, M1/M2<1, M1 being the modulus of the reinforcing element for any elongation of the ply less than or equal to K1×A1%, M2 being the modulus of the reinforcing element for any elongation of the ply greater than or equal to K2×A1%, where K1 ranges from 0.8 to 0.95 and K2 ranges from 1.05 to 1.2, the moduli M1, M2 and the elongation at break AR being measured in accordance with the standard ASTM D885-03, the reinforced ply being **characterized in that** for any elongation of the ply in the main direction (A) less than or equal to A1%, the second filamentary member deforms plastically.

2. Reinforced ply according to the preceding claim, wherein, for each reinforcing element, M1/M2 is less than or equal to 0.5, preferably less than or equal to 0.1 and preferably less than or equal to 0.05.

3. Reinforced ply according to either one of the preceding claims, wherein, for any elongation of the ply in the main direction (A) less than K1×A1%, each reinforcing element has a modulus less than or equal to 10/A1 N, preferably less than or equal to 8/A1 N, preferably less than or equal to 7/A1 N.

4. Reinforced ply according to any one of the preceding claims, wherein, for any elongation of the ply in the main direction (A) greater than K2×A1%, each reinforcing element has a modulus greater than or equal to 10 N, preferably greater than or equal to 15 N.

5. Reinforced ply according to any one of the preceding claims, wherein A1 lies in the range from 15 to 50%, preferably from 15 to 45%, very preferably from 15 to 25%.

6. Reinforced ply according to any one of the preceding claims, wherein, for each reinforcing element, the second filamentary member has an elongation before break AR, measured in accordance with the standard ASTM D885-03, greater than or equal to 30%, preferably greater than or equal to 50%, preferably greater than or equal to 60%, preferably greater than or equal to 80% and very preferably greater than or equal to 100%.

7. Reinforced ply according to any one of the preceding claims, wherein the tenacity of the second filamentary member is less than or equal to 20 cN/tex, preferably less than or equal to 15 cN/tex, preferably less than or equal to 10 cN/tex.

8. Reinforced ply according to any one of the preceding claims, wherein the tenacity of the first filamentary member is greater than or equal to 30 cN/tex, preferably greater than or equal to 40 cN/tex, and preferably greater than or equal to 60 cN/tex.

9. Reinforced ply according to any one of the preceding claims, wherein the reinforcing element also comprises a means for joining the first and the second filamentary member together.

10. Reinforced ply according to any one of the preceding claims, wherein the polymer composition comprises at least one elastomer chosen from diene elastomers, olefinic elastomers, thermoplastic elastomers and mixtures thereof.

11. Reinforced ply according to any one of the preceding claims, wherein the polymer composition comprises a reinforcing filler chosen from carbon black, silica and a mixture thereof.

12. Reinforced ply according to any one of the preceding claims, said ply being intended for a pneumatic vehicle tire, wherein the laying pitch p of the reinforcing elements in the direction (X), perpendicular to the direction (A), ranges from 0.5 to 1.5 mm, preferably from 0.7 to 1.5 mm, the direction (A) being substantially parallel to the axial direction (YY') of the pneumatic tyre.

13. Rubber article comprising a reinforced ply according to any one of Claims 1 to 12.

14. Pneumatic or non-pneumatic vehicle tyre comprising a reinforced ply according to any one of Claims 1 to 12.

15. Method for manufacturing a pneumatic tyre (1) according to the preceding claim, wherein:
• a sleeve is built around a tyre-building drum substantially exhibiting symmetry of revolution about an axis of revolution, by successively laying the various elements that make it up, said sleeve (15) comprising at least:
i. two beads (4) that are intended to come into contact with a rim (5) and are situated axially more or less equidistantly from an equatorial plane (XZ) of the green form and two sidewalls, each sidewall (3) extending axially inward from a bead,
ii. a carcass reinforcement (9) that is situated radially on the inside, connecting the two sidewalls together and anchored in each bead at a circumferential reinforcing element (11), said carcass reinforcement being made up of a reinforced ply according to one of Claims 1 to 12,
• an inner annular space (6) is opened up by moving, radially towards the outside, at least the portion (16) of the sleeve that is situated between the sidewalls intended to form the crown part of the green form,
• a crown (2) comprising a radially outer tread surface (21), intended to come into contact with the ground, and a crown reinforcement (10) intended to reinforce the crown of the pneumatic tyre is laid radially on the outside of the green form, the crown comprising two axial ends (22) such that, after the crown has been laid on the sleeve, each sidewall continues an axial end towards a bead,
a green form being understood to be a pneumatic tyre in the uncured state, that is to say before the compositions that make it up are crosslinked.
